# FASCICULE DE BREVET EUROPEEN

(11) **EP 0 535 199 B1**
(45) Date de publication et mention de la délivrance du brevet: **13.12.1995**
(21) Numéro de dépôt: 92908580.1
(22) Date de dépôt: 21.04.1992
(51) Int. Cl.: G02B 6/44, B29C 35/10, B29D 11/00, B29C 47/02

(54) **PROCEDE ET INSTALLATION POUR LA FABRICATION EN CONTINU D'UN CABLE PLAT, NOTAMMENT A FIBRES OPTIQUES**
VERFAHREN UND EINRICHTUNG ZUM KONTINUIERLICHEN HERSTELLEN EINES FLACHKABELS, INSBESONDERE EIN FIBEROPTISCHES KABEL
METHOD AND EQUIPMENT FOR CONTINUOUSLY PRODUCING A FLAT CABLE, PARTICULARLY AN OPTICAL FIBRE CABLE

(30) Priorité: 19.04.1991 FR 9105032; 02.12.1991 FR 9115055
(43) Date de publication de la demande: 07.04.1993
(73) Titulaire: E. KERTSCHER S.A., CH-1462 Yvonand (CH)
(72) Inventeur: BULUSCHEK, Bruno, CH-1026 Echandens (CH); KERTSCHER, Eberhard, CH-1462 Yvonand (CH)
(74) Mandataire: Nithardt, Roland
(86) Numéro de dépôt international: CH9200075
(87) Numéro de publication internationale: WO9218892

(56) Documents cités:
- EP-A- 0 031 972
- EP-A- 0 104 864
- EP-A- 0 170 185
- EP-A- 0 290 849
- EP-A- 0 409 011
- EP-A- 0 438 668
- WO-A-86/05085
- DE-A- 2 459 844
- DE-A- 3 717 852
- DE-A- 3 744 465
- DE-A- 3 833 406
- US-A- 4 198 554
- US-A- 4 277 642
- PATENT ABSTRACTS OF JAPAN vol. 7, no. 196 (P-219) 26 Août 1983 & JP-A-58 093 006

## Description

La présente invention concerne un procédé de fabrication en continu d'un câble plat contenant plusieurs conducteurs parallèles, notamment des fibres optiques, noyés dans une gaine faite d'au moins une matière synthétique photoréticulée, ce procédé comportant au moins une étape, dite principale, consistant à appliquer une première matière synthétique photoréticulable autour de conducteurs disposés parallèlement les uns aux autres pour former une gaine, et à appliquer un premier rayonnement lumineux, notamment ultraviolet, à la gaine ainsi formée pour provoquer une réticulation de ladite première matière synthétique.

L'invention concerne également une installation pour la mise en oeuvre de ce procédé pour la fabrication en continu d'un câble plat contenant plusieurs conducteurs parallèles, notamment des fibres optiques, noyés dans une gaine faite d'au moins une matière synthétique photoréticulée, cette installation comportant au moins une première tête d'application destinée à être traversée en continu par les conducteurs disposés parallèlement entre eux et pourvue d'au moins une filière pour appliquer une première matière synthétique photoréticulable autour des conducteurs pour former une gaine, au moins une première source de rayonnement lumineux, notamment ultraviolet, et au moins un premier dispositif de réticulation disposé sur la trajectoire du câble sortant de la filière et pour lequel ledit premier rayonnement lumineux est appliqué au câble pour réticuler ladite première matière synthétique.

Dans les installations actuelles de ce genre, dont on décrira des exemples de réalisation, le câble sortant de la filière traverse ensuite un four où l'on fait durcir au moins une partie de sa gaine. Ce four comporte une chambre de réticulation contenant une ou plusieurs lampes à rayonnement ultraviolet et des réflecteurs qui dirigent ce rayonnement vers le câble. Une telle chambre présente différents inconvénients pouvant se répercuter sur la qualité et la régularité de fabrication du câble. Un premier type d'inconvénient est créé par la longueur trop importante de cette chambre, due à la longueur des lampes nécessaires utilisées, qui provoque d'une part un amorçage du processus de réticulation et de stabilisation de la forme de la gaine relativement lent, de sorte que la gaine reste déformable sur une longueur relativement importante, et d'autre part une absence de guidage du câble dans cette zone, si bien qu'il peut subir des vibrations nuisibles. Un autre type d'inconvénient provient de la chaleur produite par les lampes, qui a tendance à échauffer excessivement la matière synthétique au cours de la polymérisation. Ces lampes sont généralement refroidies par ventilation, mais l'air de refroidissement peut aussi avoir des effets nuisibles sur le câble.

Enfin, pendant le court laps de temps qui s' écoule entre l'enrobage et la réticulation, la matière synthétique est molle et n'assure pas un maintien ferme des conducteurs parallèles entre eux et coplanaires. Il arrive par conséquent que ces conducteurs se déplacent les uns par rapport aux autres, ce qui altère les performances du câble.

La présente invention a pour but un procédé et une installation permettant d'éviter dans une large mesure les inconvénients mentionnés ci-dessus, et en particulier de stabiliser la gaine le plus vite possible dès sa sortie de la filière.

Dans ce but, l'invention concerne un procédé du type indiqué en préambule, caractérisé en ce que ledit premier rayonnement lumineux est appliqué à la gaine immédiatement après son formage et est transmis d'au moins une première source de rayonnement éloignée jusqu'à proximité immédiate de la gaine au moyen d'au moins un premier conducteur de lumière.

Ledit premier rayonnement lumineux peut avantageusement être distribué le long de la gaine grâce à une configuration allongée d'une sortie du premier conducteur de lumière.

Le procédé peut en outre comprendre, préalablement à ladite étape principale de formation de la gaine, une étape préliminaire consistant à coller les conducteurs parallèlement entre eux, en appliquant une seconde matière synthétique photoréticulable entre ces conducteurs maintenus parallèlement entre eux et en réticulant cette seconde matière synthétique au moyen d'un second rayonnement lumineux, notamment ultraviolet, ladite étape principale de formation de la gaine consistant alors à enrober de ladite première matière synthétique lesdits conducteurs ainsi préalablement collés pour former ladite gaine, et à réticuler ladite première matière synthétique d'enrobage au moyen dudit premier rayonnement lumineux.

De préférence l'on colle les conducteurs au moyen de la même matière synthétique que celle avec laquelle on les enrobe.

De façon avantageuse, l'on effectue la réticulation de la seconde matière synthétique utilisée pour coller les conducteurs dans une zone adjacente à la zone d'application de cette seconde matière synthétique, et l'on effectue la réticulation de la première matière synthétique utilisée pour enrober les conducteurs préalablement collés dans une zone adjacente à la zone d'application de cette première matière synthétique. Cette réticulation s'effectue en irradiant simultanément les deux faces opposées de la gaine formée autour des conducteurs.

Pour la mise en oeuvre de ce procédé une installation selon l'invention est caractérisée en ce que ladite première source de rayonnement lumineux est éloignée dudit premier dispositif de réticulation et comprend au moins un premier conducteur de lumière pour transmettre ledit rayonnement lumineux à proximité immédiate de la gaine et à la sortie immédiate de celle-ci de la filière.

De préférence, ce premier dispositif de réticulation est adjacent à la filière de la première tête d'application et comporte une chambre de réticulation.

Le premier conducteur de lumière peut comporter un tube creux rempli d'un liquide conducteur de lumière ou comporter des fibres optiques en verre de silice ou être réalisé en une matière ayant une meilleure transparence au rayonnement ultraviolet qu'au rayonnement infrarouge de la source.

Dans toutes les formes de réalisation, le premier conducteur de lumière comporte, en regard du câble, une sortie de forme allongée s'étendant le long du câble.

Selon une autre forme de réalisation particulièrement avantageuse, l'installation comporte en outre, en amont de ladite première tête d'application pour former ladite gaine, des moyens pour coller lesdits conducteurs parallèlement entre eux, lesdits moyens de collage comprenant une seconde tête d'application également traversée en continu par les conducteurs et pourvue d'au moins une filière, pour appliquer une seconde matière synthétique photoréticulable entre les conducteurs maintenus parallèles entre eux, et des moyens pour réticuler ladite seconde matière synthétique photoréticulable au moyen d'un second rayonnement lumineux.

De préférence, les moyens pour réticuler la seconde matière synthétique appliquée entre les conducteur comportent au moins une seconde source de rayonnement lumineux, notamment ultraviolet, agencée pour irradier cette seconde matière synthétique sur toutes ses faces. Cette seconde source de rayonnement lumineux peut être associée à une surface réfléchissante agencée pour concentrer le rayonnement sur la face du câble plat opposée à ladite source.

D'une façon avantageuse, les moyens pour réticuler respectivement la seconde et la première matière synthétique sont adjacents respectivement aux moyens pour appliquer la seconde matière synthétique entre les conducteurs et aux moyens pour enrober ces conducteurs de première matière synthétique.

Les moyens pour appliquer et pour réticuler ladite seconde matière synthétique servant au collage des conducteurs peuvent comporter un bloc optique unique dans lequel est ménagé un canal de guidage des conducteurs parallèlement entre eux, ce bloc étant associé à des systèmes optiques convergents pour focaliser le second rayonnement lumineux sur chacune des faces de la seconde matière synthétique utilisée pour coller ces conducteurs.

De façon similaire, les moyens pour appliquer et pour réticuler ladite première matière synthétique d'enrobage des conducteurs préalablement collés peuvent comporter un bloc optique unique dans lequel est ménagé un canal de guidage des conducteurs collés, ce bloc étant associé à des systèmes optiques convergents pour focaliser le premier rayonnement lumineux sur chacune des faces de la première matière synthétique utilisée pour enrober les conducteurs collés.

Dans une forme de réalisation particulière, le bloc optique peut se composer de deux coquilles adjacentes qui définissent ensemble ledit canal de guidage.

La présente invention et ses avantages apparaîtront mieux dans la description suivante d'exemples de fabrication d'un câble plat à fibres optiques, respectivement selon l'art antérieur et selon l'invention, en référence aux dessins annexés, dans lesquels :
la figure 1 est une vue en perspective et en coupe transversale d'un câble plat à fibres optiques pouvant être fabriqué par le procédé ci-dessus,
la figure 2 est une vue schématique d'une installation de fabrication d'un tel câble selon l'art antérieur,
la figure 3 est une vue schématique d'une première forme de réalisation d'une installation selon la présente invention,
la figure 4 représente une vue schématique d'une deuxième forme de réalisation d'une installation selon l'invention,
la figure 5 représente une vue en perspective, partiellement coupée d'un câble plat tel que réalisé selon les techniques connues et présentant un défaut évoqué ci-dessus,
la figure 6 représente une vue en perspective du câble tel qu'il se présente après la première phase du procédé de l'invention,
la figure 7 représente une vue en perspective du câble plat tel qu'il se présente après la mise en oeuvre du procédé de l'invention,
la figure 8 représente une vue de dessus d'une réalisation préférée d'une station de réticulation par application d'un rayonnement ultraviolet,
la figure 9 représente une vue de côté de la station de la figure 8, et
la figure 10 représente une vue en perspective d'une variante particulièrement avantageuse d'une station de réticulation par application d'un rayonnement ultraviolet.

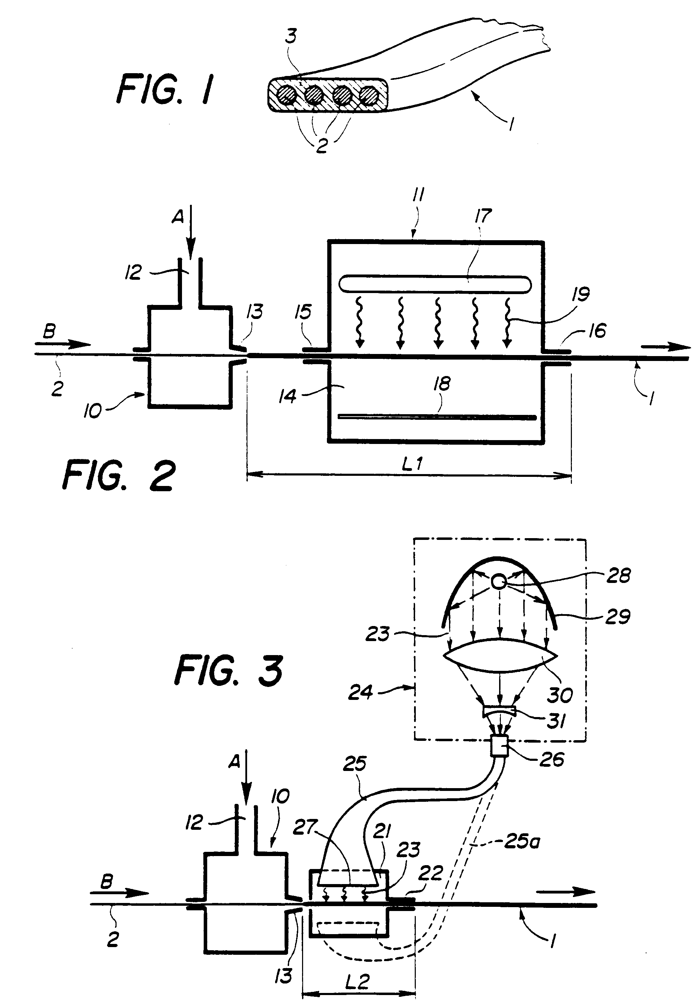

La figure 1 illustre un câble plat 1 à fibres optiques de type connu, appelé aussi câble en ruban. Dans cet exemple, il comprend quatre fibres optiques 2 juxtaposées et parallèles, enrobées dans une gaine 3 en matière synthétique qui maintient leurs positions relatives et qui les protège des dommages extérieurs. Dans certains cas, la gaine peut être en matière thermoplastique. Cependant, dans le type de câble concerné par la présente invention, la gaine 3 est faite d'une matière dont la dureté et la ténacité sont augmentées par réticulation aux rayons ultraviolets après la mise en forme de la gaine, par exemple un acrylate durcissable au rayonnement ultraviolet.

La figure 2 montre une partie de l'installation pour la fabrication d'une tel câble 1 selon l'art antérieur, en particulier les éléments de l'installation servant à former la gaine 3. Ces éléments comprennent essentiellement une tête 10 constituant un applicateur de matière synthétique sur les fibres optiques 2, et un four de réticulation 11 servant à faire durcir la matière synthétique par une réticulation amorcée au moyen d'un rayonnement ultraviolet. La tête 10 a une entrée latérale 12 par où la matière synthétique est introduite sous pression suivant la flèche A, et une filière de sortie 13 qui façonne la gaine 3 autour des fibres 2 entraînées en continu dans le sens de la flèche B. Le four 11 contient une chambre de réticulation 14 traversée longitudinalement par le câble 1, lequel passe dans des têtes d'entrée 15 et de sortie 16 du four. La chambre 14 contient une ou plusieurs lampes à ultraviolet 17 et des réflecteurs 18 qui concentrent sur le câble 1 le rayonnement 19 de la lampe. La chambre 14 est pourvue d'un circuit de ventilation (non représenté) pour refroidir la lampe 17 comme expliqué plus haut. A la sortie 16 du four il, la gaine du câble 1 est suffisamment durcie pour être soutenue et entraînée longitudinalement par des rouleaux appropriés, puis le câble peut être enroulé sur une bobine.

Comme on l'a expliqué plus haut, un des inconvénients de cette installation est la longueur relativement importante de la chambre de réticulation 14, de sorte que le câble 1 doit rester non soutenu sous une longueur L₁ relativement grande entre la filière 13 et la sortie 16 du four 11, puisque dans cette étape de fabrication un contact avec un support déformerait la gaine encore molle du câble. De plus, la gaine subit dans la chambre 14 les effets thermiques indésirables mentionnés plus haut.

Ces inconvénients sont évités dans l'installation selon l'invention telle qu'illustrée par la figure 3. La tête d'application 10 peut être la même que dans l'exemple précédent. Sa filière 13 est suivie immédiatement d'une chambre de réticulation 21 beaucoup plus petite que la chambre 14, et en particulier plus courte, de sorte que la longueur L₂ parcourue par le câble 1 entre la filière 13 et la sortie 22 de la chambre 21 ne représente qu'une fraction de la longueur L₁. En effet, le rayonnement ultraviolet 23 appliqué au câble provient d'une source 24 située à l'extérieur de la chambre 21, par l'intermédiaire d'un conducteur de lumière 25 ayant une entrée 26 couplée à la source 24 et une sortie 27 située dans la chambre 21 à proximité immédiate du câble 1. Cette sortie 27 peut avoir une forme allongée ayant les dimensions voulues pour distribuer le rayonnement sur une longueur appropriée du câble, avec une intensité appropriée. Comme la distance entre la source 24 et la chambre 21 peut être variable, le conducteur de lumière 25 peut être choisi parmi des conducteurs de différentes natures, par exemple des conducteurs à eau ou des faisceaux de fibres optiques. Afin de limiter le rayonnement thermique appliqué au câble 1, on pourra choisir un conducteur fait d'une matière ayant une bonne transmission du rayonnement ultraviolet dans la bande concernée, mais une transmission relativement médiocre des rayonnements infrarouges, par exemple un conducteur à eau.

Dans le cas présent, le conducteur de lumière 25 est un faisceau de fibres optiques. A titre d'exemple, on a représenté en traits interrompus un faisceau supplémentaire 25a provenant de la même source 24 et conduisant le rayonnement ultraviolet vers une face opposée du câble plat 1. On conçoit que les fibres optiques peuvent aisément être disposées autour du câble 1 de façon à assurer la distribution voulue du rayonnement sur les différentes surfaces extérieures de la gaine du câble. De plus, la sortie 27 du câble peut être située tout près de la filière 13, la chambre 21 pouvant même être associée directement à la tête 10.

La source 24 comporte une ou plusieurs lampes 28 émettant le rayonnement ultraviolet 23. Cette lampe peut être allongée, du même type que la lampe 17 de l'exemple précédent. Un réflecteur 29 concentre le rayonnement 23 sur un condenseur formé de deux lentilles 30 et 31 qui focalisent le rayonnement sur l'entrée 26 du conducteur à fibres optiques 25. Cependant, l'utilisation d'un conducteur de lumière permet de choisir n'importe quel type de source 24 de rayonnement ultraviolet, quel que soit son encombrement. Par ailleurs, le refroidissement par ventilation de la source 24 ne touche absolument pas le câble 1.

Comme la longueur L₂ entre la filière et la sortie de la chambre de réticulation est plus faible que dans l'art antérieur, le câble peut être soutenu plus près de sa sortie de la filière 13 et subit moins de vibrations ou d'autres effets mécaniques, ce qui garantit une meilleure qualité géométrique du câble et une meilleure liaison entre les fibres optiques 2 et la matrice de matière synthétique formant la gaine 3.

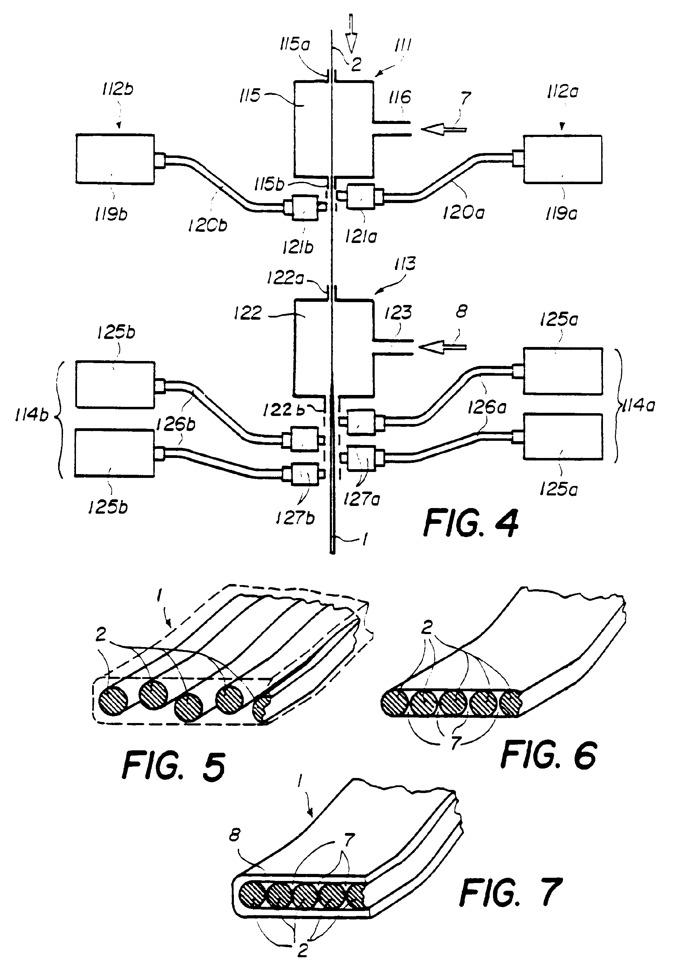

La figure 4, représente une seconde forme de réalisation de l'installation selon l'invention. Cette installation comporte des premiers moyens 111 pour coller les fibres 2 disposées parallèlement et d'une manière coplanaire, des premiers moyens 112a et 112b pour assurer la réticulation par exposition à un rayonnement ultraviolet de la matière synthétique utilisée pour assurer le collage desdites fibres, des seconds moyens 113 pour enrober ces fibres préalablement collées, et des seconds moyens 114a et 114b pour assurer la réticulation de la matière synthétique utilisée pour enrober lesdites fibres 2 et former la gaine 3.

Lesdits premiers moyens 111 pour coller les fibres comportent une chambre 115 pourvue d'une filière d'entrée 115a, d'une filière de sortie 115b et d'une arrivée 116 de matière synthétique 7 utilisée pour assurer le collage des fibres disposées parallèlement. A cet effet, la filière de sortie 115b présente une ouverture qui est sensiblement égale au diamètre des fibres de telle manière que la matière synthétique 7 vienne s'incruster entre les fibres 2 (voir figure 6) sans former aucune surépaisseur par rapport à l'épaisseur de la nappe de fibres .

Les moyens 112a et 112b pour réticuler la matière synthétique, appelés stations de réticulation, se composent de sources, respectivement 119a et 119b, génératrices de rayons ultraviolets, de conducteurs de lumières 120a et 120b et de têtes émettrices de rayonnements ultraviolets respectivement 121a et 121b. On notera que ces deux têtes sont disposées à proximité immédiate de la filière de sortie 115b, ce qui permet une réticulation quasi instantanée de la matière synthétique ayant servi à coller les fibres 2 entre elles. Comme cette réticulation s'effectue immédiatement à la sortie de la chambre 115, les fibres qui sont positionnées de façon à être parallèles entre elles et coplanaires par la géométrie même de la filière de sortie 115b, sont maintenues et figées dans cette position grâce à l'opération de réticulation qui s'effectue dans cette zone adjacente à la filière de sortie de la chambre 115.

A titre de comparaison, la figure 5 montre la position quelque peu désordonnée des fibres 2 obtenue selon les techniques de l'art antérieur, c'est-à-dire lorsque l'on n'effectue pas le collage des fibres 2 telles que représentées par la figure 6 antérieurement à l'enrobage de la nappe ainsi réalisée pour obtenir un câble plat tel que représenté par la figure 7.

Les seconds moyens 113 pour enrober la nappe de fibres préalablement encollées comportent une seconde chambre 122 équipée d'une filière d'entrée 122a et d'une filière de sortie 122b ainsi que d'une arrivée 123 de matière synthétique 8 représentée par une flèche. On notera que la matière synthétique 8 peut être identique ou différente de la matière synthétique 7 préalablement utilisée pour assurer le collage des fibres. La filière d'entrée 122a a sensiblement la même géométrie et les mêmes dimensions que la filière de sortie 115b de la chambre 115 et la filière de sortie 122b a une géométrie et des dimensions qui correspondent à celles du câble plat 1 tel que représenté par la figure 7.

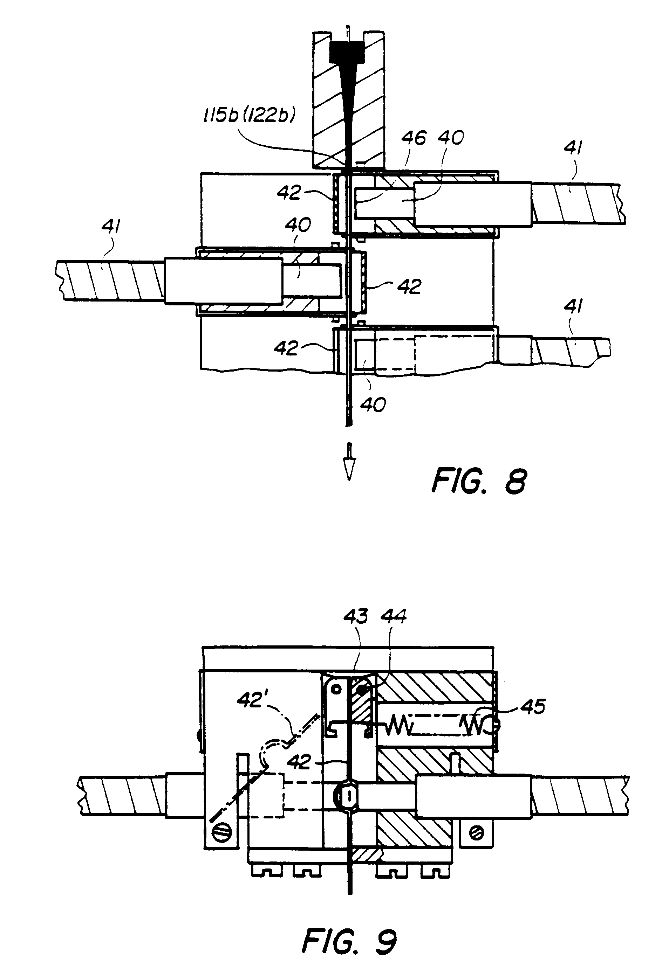

Les moyens pour réticuler la matière synthétique, respectivement 114a et 114b, appelés stations de réticulation de la matière synthétique d' enrobage 8, comportent une ou plusieurs sources, respectivement 125a et 125b, génératrices de rayonnements ultraviolets, des conducteurs de lumière, respectivement 126a et 126b, et des têtes d'application respectivement 127a et 127b. Ces têtes d'application ainsi que les têtes d'application 121a et 121b des moyens d'encollage des fibres seront décrites plus en détail en référence aux figures 8 et 9.

Comme le montre la figure 7, le câble plat 1 obtenu grâce à l'installation illustrée schématiquement par la figure 4 comporte un ensemble de fibres 2 parallèles et coplanaires enrobées dans une couche de matière synthétique 8 après avoir été préencollées au moyen de la matière synthétique 7. Selon un mode de réalisation préféré, les deux matières synthétiques 7 et 8 sont identiques de sorte que les deux substances ayant été utilisées respectivement pour coller les fibres et pour les enrober sont intimement liées et se confondent pour former la gaine 3 du câble 1 tel que représenté en figure 1.

En conclusion, l'étape d'encollage des conducteurs, notamment des conducteurs de lumière et plus particulièrement des fibres optiques, permet d'assurer une disposition régulière et coplanaire de ces composants et d' éviter leur positionnement plus ou moins aléatoire à l'intérieur de la masse d'enrobage.

En référence aux figures 8 et 9, les moyens destinés à assurer la réticulation des matières synthétiques 7 et/ou 8 comportent de préférence plusieurs têtes d'application d'un rayonnement ultraviolet.

Chacune de ces têtes comporte un élément cylindrique 40 réalisé en une matière transparente aux rayons ultraviolets, telle que par exemple le quartz, qui constitue un conducteur de lumière couplé à un conducteur flexible 41 constitué par exemple par un tube creux souple rempli d'un liquide tel que l'eau, ce tube étant connecté à une source émettrice de rayons ultraviolets (non représentée). En regard de l'extrémité 40 du conducteur de lumière est montée une surface réfléchissante 42 ayant de préférence une forme parabolique dont le but est de réfléchir une partie du rayonnement ultraviolet émis par le tronçon d'extrémité 46 du conducteur de lumière 40 afin d'irradier la matière synthétique de collage ou d'enrobage des fibres parallèles, sur toutes leurs faces.

Plusieurs têtes d'application du rayonnement peuvent être prévues afin d'accélérer le processus de réticulation et d'assurer un positionnement quasi parfait des fibres à l'intérieur de la couche de matière synthétique. On notera que ces moyens de réticulation sont disposés à proximité immédiate de la filière d'évacuation 115b ou 122b définie ci-dessus.

Comme le montre la figure 9, les surfaces réfléchissantes 42 sont montées sur des supports 43 pivotant autour d'un axe 44 et maintenus en position de travail par un ressort de traction 45. Toutefois, pour faciliter l'accès à la zone de traitement, la surface réfléchissante peut être basculée dans une position 42′, représentée en traits interrompus, par pivotement du support 43 entraînant un étirement du ressort 45 qui fait office de ressort de rappel.

Cette construction est particulièrement avantageuse en ce qu'elle permet une réalisation compacte pouvant être placée immédiatement à la sortie des filières définies ci-dessus à proximité immédiate des zones d'encollage et/ou d'enrobage des fibres.

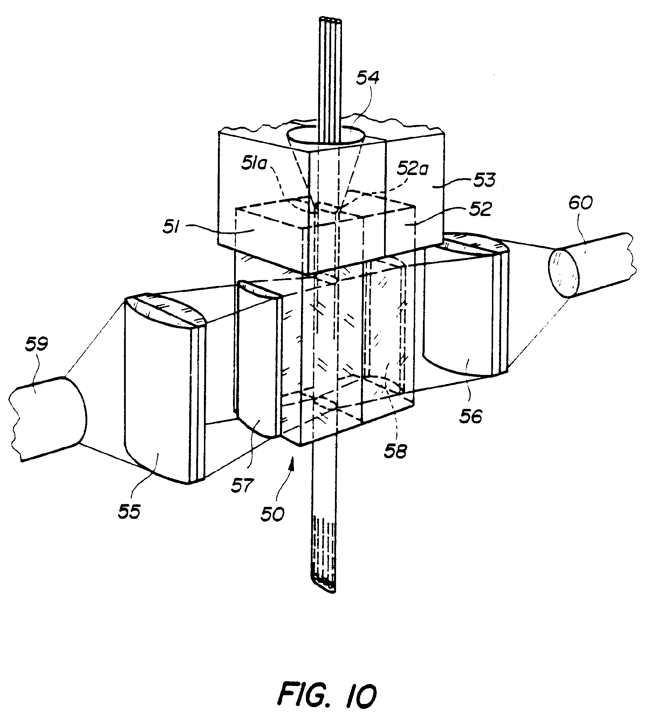

La figure 10 représente une forme de réalisation d'une station de réticulation qui présente des avantages particulièrement intéressants par rapport aux solutions décrites ci-dessus. Il est à noter que ces solutions tendent toutes à placer les stations de réticulation aussi près que possible des filières correspondantes pour éviter que les fibres ne puissent se déplacer les unes relativement aux autres pendant le laps de temps qui s' écoule entre le moment où elles sortent de la filière et celui où elles sont figées en position grâce à la réticulation de la matière synthétique. Dans la réalisation décrite ci-dessous, ce laps de temps est réduit au minimum grâce au fait que la fonction d'application de matière synthétique soit pour coller les fibres, soit pour les enrober lorsqu'elles ont été préalablement collées, et la fonction de réticulation par application d'un rayonnement ultraviolet sont assurées par un même bloc optique, par exemple en quartz, qui sert de filière et de diffuseur de rayons ultraviolets. Ce bloc optique 50 se compose de deux coquilles 51 et 52 qui comportent chacune un évidement 51a et 52a qui, lorsque les coquilles sont juxtaposées, définit un canal dont les dimensions sont celles des fibres accolées ou du câble plat de telle manière que ces fibres soient guidées pendant leur passage dans ce canal. Ce bloc est associé à une pièce 53 qui contient une chambre 54 contenant la matière synthétique. Par ailleurs, chacune des coquilles est associée à une lentille convergente, respectivement 55 et 56, qui focalise sur la face de la coquille correspondante, respectivement 57 et 58, en forme de lentille convergente, les rayons ultraviolets transmis par des conducteurs de lumière 59 et 60. La transmission de ces rayons est de ce fait optimale dans une zone, ce qui élimine quasiment toute possibilité de déplacement relatif des fibres.

Les techniques de fabrication décrites dans le cadre de la présente invention sont aussi applicables à des câbles comportant des conducteurs électriques ou similaires à la place des fibres optiques ou en plus de ces fibres.

## Revendications

1. Procédé de fabrication en continu d'un câble plat (1) contenant plusieurs conducteurs parallèles (2), notamment des fibres optiques, noyés dans une gaine (3; 8) faite d'au moins une matière synthétique photoréticulée, ce procédé comportant au moins une étape, dite principale, consistant à appliquer une première matière synthétique photoréticulable (3; 8) autour de conducteurs (2) disposés parallèlement les uns aux autres pour former une gaine, et à appliquer un premier rayonnement lumineux (23), notamment ultraviolet, à la gaine ainsi formée pour provoquer une réticulation de ladite première matière synthétique, caractérisé en ce que ledit premier rayonnement lumineux est appliqué à la gaine immédiatement après son formage et est transmis d'au moins une première source de rayonnement éloignée (28; 125a, 125b) jusqu'à proximité immédiate de la gaine au moyen d'au moins un premier conducteur de lumière (25, 25a; 126a, 126b; 59, 60).

2. Procédé selon la revendication 1, caractérisé en ce que ledit premier rayonnement lumineux (23) est distribué le long de la gaine grâce à une configuration allongée d'une sortie du premier conducteur de lumière (25, 25a; 126a, 126b; 59, 60).

3. Procédé selon la revendication 1, caractérisé en ce qu'il comprend en outre, préalablement à ladite étape principale de formation de la gaine, une étape préliminaire consistant à coller les conducteurs (2) parallèlement entre eux, en appliquant une seconde matière synthétique photoréticulable (7) entre ces conducteurs maintenus parallèlement entre eux et en réticulant cette seconde matière synthétique au moyen d'un second rayonnement lumineux (112a, 112b), notamment ultraviolet, ladite étape principale de formation de la gaine consistant alors à enrober de ladite première matière synthétique (3; 8) lesdits conducteurs ainsi préalablement collés pour former ladite gaine, et à réticuler ladite première matière synthétique d'enrobage au moyen dudit premier rayonnement lumineux (28; 125a, 125b).

4. Procédé selon la revendication 3, caractérisé en ce qu'on colle les conducteurs (2) au moyen de la même matière synthétique que celle avec laquelle on les enrobe.

5. Procédé selon la revendication 3, caractérisé en ce qu'on effectue la réticulation de la seconde matière synthétique (7) utilisée pour coller les conducteurs dans une zone adjacente à la zone d'application (115) de cette seconde matière synthétique, et en ce qu'on effectue la réticulation de la première matière synthétique (3; 8) utilisée pour enrober les conducteurs préalablement collés dans une zone adjacente à la zone d'application (122) de cette première matière synthétique.

6. Procédé selon la revendication 1, caractérisé en ce que l'on effectue la réticulation en irradiant simultanément les deux faces opposées de la gaine (3; 8) formée autour des conducteurs (2).

7. Installation pour la mise en oeuvre du procédé selon la revendication 1, pour la fabrication en continu d'un câble plat (1) contenant plusieurs conducteurs parallèles (2), notamment des fibres optiques, noyés dans une gaine (3; 8) faite d'au moins une matière synthétique photoréticulée, cette installation comportant au moins une première tête d'application (10; 113; 54) destinée à être traversée en continu par les conducteurs (2) disposés parallèlement entre eux et pourvue d'au moins une filière (13; 122b) pour appliquer une première matière synthétique photoréticulable (3; 8) autour des conducteurs pour former une gaine, au moins une première source de rayonnement lumineux (28; 125a, 125b), notamment ultraviolet, et au moins un premier dispositif de réticulation (21) disposé sur la trajectoire du câble sortant de la filière (13, 122b) et pour lequel ledit premier rayonnement lumineux est appliqué au câble pour réticuler ladite première matière synthétique, caractérisée en ce que ladite première source de rayonnement lumineux (28; 125a, 125b) est éloignée dudit premier dispositif de réticulation et comprend au moins un premier conducteur de lumière (25, 25a; 126a, 126b; 59, 60) pour transmettre ledit rayonnement lumineux à proximité immédiate de la gaine et à la sortie immédiate de celle-ci de la filière (13; 122b).

8. Installation selon la revendication 7, caractérisée en ce que le premier dispositif de réticulation (21) est adjacent à la filière (13; 122b) de la première tête d'application (10; 113; 54).

9. Installation selon la revendication 8, caractérisée en ce que le premier dispositif de réticulation comporte une chambre de réticulation (21).

10. Installation selon la revendication 7, caractérisée en ce que le premier conducteur de lumière (25, 25a; 126a, 126b) comporte un tube creux rempli d'un liquide conducteur de lumière.

11. Installation selon la revendication 7, caractérisée en ce que le premier conducteur de lumière (25, 25a; 126a, 126b) comporte des fibres optiques en verre de silice.

12. Installation selon la revendication 7, caractérisée en ce que le premier conducteur de lumière (25, 25a; 126a, 126b) est réalisé en une matière ayant une meilleure transparence au rayonnement ultraviolet qu'au rayonnement infrarouge de la source.

13. Installation selon la revendication 7, caractérisée en ce que le premier conducteur de lumière (25, 25a; 126a, 126b) comporte, en regard du câble (1), une sortie de forme allongée (27) s'étendant le long du câble.

14. Installation selon la revendication 7, caractérisée en ce qu'elle comporte en outre, en amont de ladite première tête d'application (10; 113; 54) pour former ladite gaine, des moyens pour coller lesdits conducteurs (2) parallèlement entre eux, lesdits moyens de collage comprenant une seconde tête d'application également traversée en continu par les conducteurs et pourvue d'au moins une filière (115b), pour appliquer une seconde matière synthétique photoréticulable (7) entre les conducteurs maintenus parallèles entre eux, et des moyens pour réticuler ladite seconde matière synthétique photoréticulable (7) au moyen d'un second rayonnement lumineux (112a, 112b).

15. Installation selon la revendication 14, caractérisé en ce que les moyens pour réticuler la seconde matière synthétique (7) comportent au moins une seconde source de rayonnement lumineux (119a, 119b), notamment ultraviolet, agencée pour irradier cette seconde matière synthétique sur toutes les faces de cette matière.

16. Installation selon la revendication 15, caractérisée en ce que ladite seconde source de rayonnement lumineux (119a, 119b) est associée à une surface réfléchissante (42) agencée pour concentrer le rayonnement sur la face du câble plat opposée à ladite source.

17. Installation selon la revendication 14, caractérisée en ce que les moyens (112a, 112b; 114a, 114b) pour réticuler respectivement la seconde (7) et la première (3; 8) matière synthétique sont adjacents respectivement aux moyens (115) pour appliquer la seconde matière synthétique (7) entre les conducteurs et aux moyens (122) pour enrober ces conducteurs de première matière synthétique (3; 8).

18. Installation selon la revendication 14, caractérisée en ce que les moyens pour appliquer et pour réticuler ladite seconde matière synthétique (7) servant au collage des conducteurs comportent un bloc optique unique (50) dans lequel est ménagé un canal de guidage des conducteurs parallèlement entre eux, ce bloc étant associé à des systèmes optiques convergents (55, 56) pour focaliser le second rayonnement lumineux sur chacune des faces de la seconde matière synthétique utilisée pour coller ces conducteurs.

19. Installation selon la revendication 14, caractérisée en ce que les moyens pour appliquer et pour réticuler ladite première matière synthétique d'enrobage des conducteurs préalablement collés comportent un bloc optique unique (50) dans lequel est ménagé un canal de guidage des conducteurs collés, ce bloc étant associé à des systèmes optiques convergents pour focaliser le premier rayonnement lumineux sur chacune des faces de la première matière synthétique utilisée pour enrober les conducteurs collés.

20. Installation selon l'une ou l'autre des revendications 18 ou 19, caractérisée en ce que le bloc optique se compose de deux coquilles (51, 52) adjacentes qui définissent ensemble ledit canal de guidage.

## Patentansprüche

1. Verfahren zum kontinuierlichen Herstellen eines Flachkabels (1), das mehrere parallele Leiter (2), insbesondere optische Fasern enthält, die in einer Umhüllung (3;8) aus mindestens einem photo-retikulierten Kunststoff versenkt sind, wobei das Verfahren mindestens eine Stufe aufweist, die als Hauptstufe bezeichnet wird und darin besteht, einen ersten photo-retikulierbaren Kunststoff (3;8) um die Leiter (2), die parallel zueinander angeordnet sind, aufzubringen, um eine Umhüllung zu bilden und die gebildete Umhüllung einer ersten Lichtbestrahlung (23), insbesondere einer Ultraviolettbestrahlung, auszusetzen, um eine Retikulierung des ersten Kunststoffes herbeizuführen,
**dadurch gekennzeichnet**, daß
die erste Lichtbestrahlung unverzüglich nach der Bildung der Umhüllung und aus wenigstens einer ersten entfernten Bestrahlungsquelle (28;125a,125b) erfolgt, wobei das Licht bis in unmittelbare Nähe der Umhüllung mit Hilfe von mindestens einem ersten Lichtleiter (25,25a;126a,126b;59,60) herangeführt wird.

2. Verfahren nach Anspruch 1,
**dadurch gekennzeichnet**, daß
die erste Lichtbestrahlung (23) entlang der Umhüllung mittels einer langgezogenen Gestaltung eines Ausgangs des ersten Lichtleiters (25,25a;126a, 126b;59,60) verteilt wird.

3. Verfahren nach Anspruch 1,
**dadurch gekennzeichnet**, daß
vor der Hauptstufe für die Bildung der Umhüllung eine Vorstufe vorgesehen ist, die darin besteht, die Leiter (2) parallel zueinander zu verkleben, indem ein zweiter photo-retikulierbarer Kunststoff (7) zwischen Leitern, die parallel zueinander festgehalten werden, aufgebracht wird und der zweite Kunststoff mit Hilfe einer zweiten Lichtbestahlung (112a,112b), insbesondere einer Ultraviolettbestrahlung, retikuliert wird, wobei die Hauptstufe zur Bildung der Umhüllung darin besteht, die Leiter, die somit vorher verklebt wurden, mit dem ersten Kunststoff (3;8) zu umhüllen, um die Umhüllung zu bilden und den ersten Kunststoff für das Umhüllen mittels der ersten Lichtbestrahlung (28;125a,125b) zu retikulieren.

4. Verfahren nach Anspruch 3,
**dadurch gekennzeichnet**, daß
die Leiter (2) mit dem gleichen Kunststoff verklebt werden, mit dem sie umhüllt werden.

5. Verfahren nach Anspruch 3,
**dadurch gekennzeichnet**, daß
die Retikulierung des zweiten Kunststoffes (7), der für das Verkleben der Leiter verwendet wird, in einem an den Bereich (115) für das Aufbringen des zweiten Kunststoffes angrenzenden Bereich erfolgt, und daß die Retikulierung des ersten Kunststoffes (3;8), der für das Umhüllen der vorher verklebten Leiter verwendet wird, in einem an den Bereich (122) für das Aufbringen des ersten Kunststoffes angrenzenden Bereich erfolgt.

6. Verfahren nach Anspruch 1,
**dadurch gekennzeichnet**, daß
die Retikulierung erfolgt, indem die beiden entgegengesetzten Seiten der Umhüllung (3;8), die um die Leiter (2) gebildet wird, gleichzeitig bestrahlt werden.

7. Vorrichtung zur Durchführung des Verfahrens nach Anspruch 1, für das kontinuierliche Herstellen eines Flachkabels (1), das mehrere parallele Leiter (2), insbesondere optische Fasern enthält, die in einer Umhüllung (3;8) aus mindestens einem photoretikulierten Kunststoff versenkt sind, wobei die Vorrichtung mindestens einen ersten Auftragsblock (10;113;54) enthält, der von den parallel zueinander angeordneten Leitern (2) kontinuierlich durchquerbar und mit mindestens einer Führung (13;122b) für das Aufbringen eines ersten photo-retikulierbaren Kunststoffes (3;8) versehen ist, um die Leiter zur Bildung einer Umhüllung aus mindestens einer ersten Quelle einer Lichtbestrahlung (28;125a, 125b), insbesondere einer Ultraviolettbestrahlung, zu bestrahlen, und mit mindestens einer ersten Retikulierungseinrichtung (21), die auf der Laufbahn des Kabels, das aus der Führung (13,122b) heraustritt, angeordnet ist, für die erste Lichtbestrahlung des Kabels zur Retikulierung des ersten Kunststoffes,
**dadurch gekennzeichnet**, daß
die erste Quelle einer Lichtbestrahlung (28;125a, 125b) von der ersten Retikulierungseinrichtung entfernt angeordnet ist und mindestens einen ersten Lichtleiter (25,25a;126a,126b;59,60) für die Übertragung der Lichtbestrahlung bis in unmittelbare Nähe der Umhüllung an dem unmittelbaren Ausgang der Umhüllung aus der Führung (13;122b) aufweist.

8. Vorrichtung nach Anspruch 7,
**dadurch gekennzeichnet**, daß
die erste Retikuliereinrichtung (21) an die Führung (13;122b) des ersten Auftragsblockes (10,113; 54) angrenzend angeordnet ist.

9. Vorrichtung nach Anspruch 8,
**dadurch gekennzeichnet**, daß
die erste Retikuliereinrichtung eine Retikulierkammer (21) enthält.

10. Vorrichtung nach Anspruch 7,
**dadurch gekennzeichnet**, daß
der erste Lichtleiter (25,25a;126a,126b) ein hohles Rohr aufweist, das mit einer Lichtleitflüssigkeit gefüllt ist.

11. Vorrichtung nach Anspruch 7,
**dadurch gekennzeichnet**, daß
der erste Lichtleiter (25,25a;126a,126b) optische Fasern aus Siliziumglas enthält.

12. Vorrichtung nach Anspruch 7,
**dadurch gekennzeichnet**, daß
der erste Lichtleiter (25,25a;126a,126b) aus einem Werkstoff hergestellt ist, der eine bessere Durchlässigkeit für die Ultraviolettstrahlung als für die Infrarotstrahlung aus der Quelle aufweist.

13. Vorrichtung nach Anspruch 7,
**dadurch gekennzeichnet**, daß
der erste Lichtleiter (25,25a;126a,126b) gegenüber dem Kabel (1) einen langgezogenen Ausgang (27) aufweist, der sich entlang des Kabels erstreckt.

14. Vorrichtung nach Anspruch 7,
**dadurch gekennzeichnet**, daß
außerdem vor dem ersten Auftragsblock (10;113;54) für die Bildung der Umhüllung Einrichtungen für ein Verkleben der parallel zueinander angeordneten Leiter (2) vorgesehen sind, wobei die Einrichtungen für das Verkleben einen zweiten Auftragsblock enthalten, der ebenfalls von den Leitern kontinuierlich durchquerbar und mit mindestens einer Führung (115b) versehen ist, um einen zweiten photoretikulierbaren Kunststoff (7) zwischen den Leitern, die parallel zueinander festgehalten sind, aufzubringen, und mit Einrichtungen für die Retikulierung des zweiten photo-retikulierbaren Kunststoff (7) mittels einer zweiten Lichtbestrahlung (112a,112b).

15. Vorrichtung nach Anspruch 14,
**dadurch gekennzeichnet**, daß
die Einrichtungen für die Retikulierung des zweiten Kunststoffes (7) mindestens eine zweite Quelle zur Lichtbestrahlung (119a,119b), insbesondere für eine Ultraviolettbestrahlung, enthalten, die ausgelegt ist, um den zweiten Kunststoff auf allen Seitenflächen zu bestrahlen.

16. Vorrichtung nach Anspruch 15,
**dadurch gekennzeichnet**, daß
die zweite Quelle zur Lichtbestrahlung (119a,119b) mit einer reflektierenden Fläche (42) verbunden ist, die vorgesehen ist, um die Bestrahlung auf die Seitenfläche des Flachkabels, die der Quelle entgegengesetzt ist, zu konzentrieren.

17. Vorrichtung nach Anspruch 14,
**dadurch gekennzeichnet,** daß
die Einrichtungen (112a,112b;114a,114b) für die jeweilige Retikulierung des zweiten (7) und des ersten (3;8) Kunststoffes jeweils an die Einrichtungen (115) für das Aufbringen des zweiten Kunststoffes (7) zwischen den Leitern und an die Einrichtungen (122) für das Umhüllen der Leiter mit dem ersten Kunststoff (3;8) angrenzen.

18. Vorrichtung nach Anspruch 14,
**dadurch gekennzeichnet,** daß
die Einrichtungen für das Aufbringen und für die Retikulierung des zweiten Kunststoffes (7) für das Verkleben der Leiter einen einzigen Optikblock (50) aufweisen, in welchem ein Kanal für die Parallelführung der Leiter vorhanden ist, wobei der Optikblock mit konvergierenden optischen Systemen (55,56) verbunden ist, um die zweite Lichtbestrahlung auf jeder der Seitenflächen des zweiten Kunststoffes, der für das Verkleben der Leiter verwendet wird, zu fokussieren.

19. Vorrichtung nach Anspruch 14,
**dadurch gekennzeichnet**, daß
die Einrichtungen für das Aufbringen und für die Retikulierung des ersten Kunststoffes für das Umhüllen der vorher verklebten Leiter einen einzigen Optikblock (50) aufweisen, in welchem ein Kanal für die Führung der verklebten Leiter vorhanden ist, wobei der Optikblock mit konvergierenden optischen Systemen verbunden ist, um die erste Lichtbestrahlung auf jeder der Seitenflächen des ersten Kunststoffes, der für das Umhüllen der verklebten Leiter verwendet wird, zu fokussieren.

20. Vorrichtung nach einem der Ansprüche 18 oder 19,
**dadurch gekennzeichnet**, daß
der Optikblock aus zwei aneinander angrenzenden Schalen (51,52) besteht, die zusammen den Führungskanal festlegen.

## Claims

1. Method for continuously manufacturing flat cable (1) containing several parallel conductors (2), specifically optical fibers, encased in a duct (3; 8) made of at least one photo-cross linked synthetic material, said method comprising at least one phase, said principal phase, consisting of applying a first photo-cross linked synthetic material (3; 8) around the conductors (2) disposed in parallel to one another to form a duct, and of applying a first light radiation (23), specifically ultraviolet radiation, to the duct such as formed to cause a cross linking of the said first synthetic material, characterized in that said first light radiation is applied to the duct immediately after it is formed and is transmitted from at least a first separate radiation source (28; 125a, 125b) to the immediate proximity of the duct by means of at least a first light conductor (25, 25a; 126a, 126b; 59, 60).

2. Method according to claim 1, characterized in that said first light radiation (23) is distributed along the duct by virtue of the elongate configuration of one output of the first light conductor (25, 25a; 126a, 126b; 59, 60)

3. Method according to claim 1, characterized in that it moreover comprises, before said principal phase of forming the duct, a preliminary phase consisting of gluing the conductors (2) in parallel to one another, by applying a second photo-cross linked synthetic material (7) between these conductors kept in parallel to one another and of cross linking this second synthetic material by means of a second light radiation (112a, 112b), specifically ultraviolet radiation, said principal phase of forming the duct consisting of coating said previously glued conductors with said first synthetic material (3; 8) to form said duct, and of cross linking said first coating synthetic material by means of said first light radiation (28; 125a, 125b).

4. Method according to claim 3, characterized in that the conductors (2) are glued with the same synthetic material as that which coats them.

5. Method according to claim 3, characterized in that cross linking of the second synthetic material (7) used to glue the conductors takes place in an area adjacent the area (115) where this second synthetic material is applied, and in that cross linking of the first synthetic material (3; 8) used to coat the previously glued conductors takes place in an area adjacent the area (122) where this first synthetic material is applied.

6. Method according to claim 1, characterized in that cross linking is accomplished by simultaneously irradiating the two opposite surfaces of the duct (3; 8) formed around the conductors (2).

7. Equipment for implementing the method according to claim 1, for continuously manufacturing flat cable (1) containing several parallel conductors (2), specifically optical fibers, encased in a duct (3; 8) made of at least one photo-cross linked synthetic material, this equipment comprising at least a first applicator head (10; 113; 54) designed to be continuously traversed by the conductors (2) disposed in parallel to one another and having at least one die (13; 122b) to apply a first photo-cross linked synthetic material (3; 8) around the conductors to form a duct, at least a first light radiation source (28; 125a, 125b), specifically ultraviolet radiation, and at least a first cross linking device (21) located on the trajectory of the cable exiting of the die (13, 122b) and through which said first light radiation is applied to the cable for cross linking said first synthetic material, characterized in that said first light radiation source (28; 125a, 125b) is separate form said first cross linking device and comprises at least a first light conductor (25, 25a; 126a, 126b; 59, 60) for transmitting said light radiation to the immediate proximity of the duct and to the immediate exit of the duct of the die (13; 122b).

8. Equipment according to the claim 7, characterized in that the first cross linking device (21) is adjacent the die (13; 122b) of the first applicator head (10; 113; 54).

9. Equipment according to the claim 8, characterized in that the first cross linking device comprise a cross linking chamber (21).

10. Equipment according to the claim 7, characterized in that the first light conductor (25, 25a; 126a, 126b) comprises a hollow tube filled with light conducting liquid.

11. Equipment according to the claim 7, characterized in that the first light conductor (25, 25a; 126a, 126b) comprises silicon glass optical fibers.

12. Equipment according to the claim 7, characterized in that the first light conductor (25, 25a; 126a, 126b) is made of a material more highly transparent to the ultraviolet radiation than to the infrared radiation emitted by the source.

13. Equipment according to the claim 7, characterized in that the first light conductor (25, 25a; 126a, 126b) comprises an elongate output (27) across from the cable (1), and extending the length of the cable.

14. Equipment according to the claim 7, characterized in that it moreover comprises, above said first applicator head (10; 113; 54) to form said duct, means for gluing said conductors (2) in parallel to one another, said means of gluing comprising a second applicator head also continuously traversed by the conductors and provided with at least one die (115b), to apply a second photo-cross linked synthetic material (7) between the conductors maintained parallel to one another, and means for cross linking said second photo-cross linked synthetic material (7) by means of a second light radiation (112a, 112b).

15. Equipment according to the claim 14, characterized in that the means for cross linking the second synthetic material (7) comprises at least a second light radiation source (119a, 119b), specifically ultraviolet radiation, designed to irradiate every surface of said second synthetic material.

16. Equipment according to the claim 15, characterized in that said second light radiation source (119a, 119b) is associated with a reflective surface (42) designed to concentrate the beam on the surface of the flat cable which is opposite said source.

17. Equipment according to the claim 14, characterized in that the means (112a, 112b; 114a, 114b) to cross link respectively the second (7) and the first (3; 8) synthetic material, are respectively adjacent the means (115) for applying the second synthetic material (7) between the conductors and means (122) for coating these conductors with said first synthetic material (3; 8).

18. Equipment according to the claim 14, characterized in that the means for applying and for cross linking said second synthetic material (7) used for the gluing of the conductors comprises a sole optical bench (50) with a passageway inside for maintaining the conductors parallel to one another, this bench being associated with converging optical systems (55, 56) for focusing the second light radiation onto each surface of the second synthetic material used to glue these conductors.

19. Equipment according to the claim 14, characterized in that the means for applying and for cross linking said first synthetic material used for the coating of the conductors previously glued comprises a sole optical bench (50) with a passageway inside for maintaining the glued conductors, this bench being associated with converging optical systems for focusing the first light radiation onto each surface of the first synthetic material used to coat the glued conductors.

20. Equipment according to anyone of the claims 18 or 19, characterized in that the optical bench is composed of two adjacent protuberances (51, 52) which together define the said guide passageway.
